# EUROPEAN PATENT SPECIFICATION

(11) **EP 2 839 485 B1**
(45) Date of publication and mention of the grant of the patent: **07.03.2018**
(21) Application number: 13778166.2
(22) Date of filing: 17.04.2013
(51) Int. Cl.: G21C 21/00, G21D 5/04, G21C 3/33, G21C 7/12, G21C 13/04, G21C 1/32, G21C 7/08, G21C 13/02

(54) **SMALL MODULAR REACTOR CONTROL ROD GUIDE ASSEMBLY**
STEUERSTABFÜHRUNGSEINHEIT FÜR KLEINE MODULARE REAKTOREN
ENSEMBLE DE GUIDAGE DE BARRE DE COMMANDE POUR PETIT RÉACTEUR MODULAIRE

(30) Priority: 17.04.2012 US 201261625448 P
(43) Date of publication of application: 25.02.2015
(73) Proprietor: Babcock & Wilcox mPower, Inc., Charlotte, NC 28277 (US)
(72) Inventor: WALTON, Lewis, A., Forest, VA 24551 (US); PABIS, George, S., Lynchburg, VA 24503 (US); ULLMANN, Julius, M., Forest, VA 24551 (US); RAAS, Jean, H., Lynchburg, VA 24503 (US); GILLIAM, Martha, A., Lynchburg, VA 24503 (US); AUSTIN, Anne, R., Forest, VA 24551 (US); BARRINGER, Eric, A., Rustburg, VA 24508 (US)
(74) Representative: D Young & Co LLP
(86) International application number: PCT/US2013/036888
(87) International publication number: WO 2013/158711

(56) References cited:
- US-A- 3 379 617
- US-A- 3 814 667
- US-A- 3 940 311
- US-A- 4 078 966
- US-A- 4 793 965
- US-A- 4 882 123
- US-A- 5 274 685

## Description

This application claims the benefit of U.S. Provisional Application No. 61/625,448 filed April 17, 2012.

### BACKGROUND

The following relates to the nuclear power reactor arts and related arts.

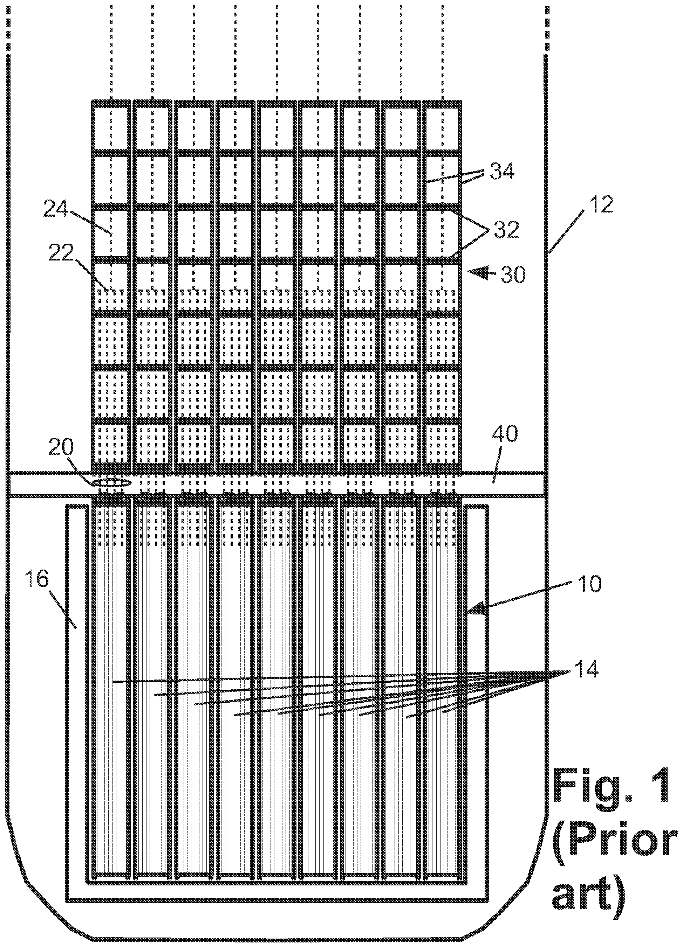

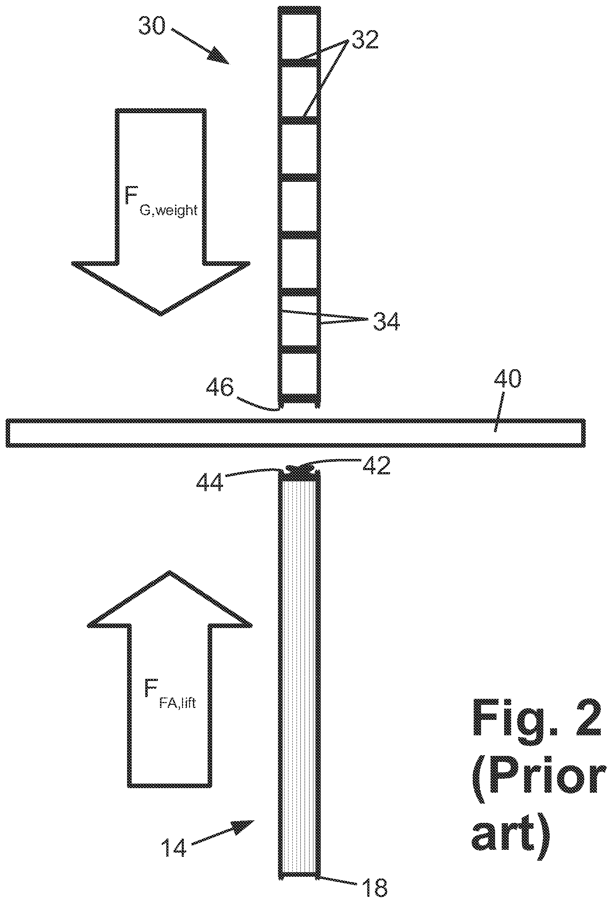

With reference to FIGURES 1 and 2, the lower portion of a nuclear power plant of the pressurized water configuration, commonly called a pressurized water reactor (PWR) design, is shown. A nuclear reactor core **10** comprises an assembly of vertically oriented fuel rods containing fissile material, typically ²³⁵U. The reactor core **10** is disposed at or near the bottom of a pressure vessel **12** that contains primary coolant water serving as a moderator to moderate the chain reaction and as coolant to cool the reactor core **10.** The primary coolant further acts as a heat transfer medium conveying heat generated in the reactor core **10** to a steam generator. At the steam generator, heat from the primary coolant transfers to a secondary coolant loop to convert the secondary coolant into steam that is used for a useful purpose, such as driving a turbine of an electrical power generation facility. A conventional PWR design includes one or (typically) more steam generators that are external to the pressure vessel containing the nuclear reactor core. Large-diameter piping carries primary coolant from the pressure vessel to the external steam generator and back from the steam generator to the pressure vessel to complete a primary coolant flow loop. In some designs the external steam generator is replaced by an internal steam generator located inside the pressure vessel, which has the advantage of eliminating the large diameter piping (replaced by secondary coolant feedwater and steam outlet lines that are typically of lower diameter and that do not carry the primary coolant that flows through the reactor core). Note that FIGURE 1 is a diagrammatic view of the lower reactor core region and does not include features relating to the steam generator or ancillary components.

The vertical fuel rods of the reactor core **10** are organized into fuel assemblies **14.** Illustrative FIGURE 1 shows a side view of a 9×9 array of fuel assemblies **14,** although arrays of other sizes and/or dimensions can be employed. In turn, each fuel assembly **14** comprises an array of vertically oriented fuel rods, such as a 18×18 array of fuel rods, or a 14×14 array, or so forth. The fuel assemblies further include a lower end fitting, upper end fitting, vertical guide tubes connecting the end fittings, and a number of spacer grids connected to the guide tubes, instrument tubes and fuel rods. The spacer grids fit around the guide tubes to precisely define the spacing between fuel rods and to add stiffness to the fuel assembly **14.** The spacer grids may or may not be welded to the guide tubes. (Note, FIGURES 1 and 2 represent the fuel rods of each fuel assembly **14** are shown diagrammatically with vertical lines which are not to scale respective to size or quantity, and the spacer grids, guide tubes, and other features are not shown). It is noted that the dimensions of the array of fuel assemblies **14** may in general be different from the dimensions of the array of fuel rods within the fuel assembly **14.** The fuel assemblies may employ rectangular fuel rod packing and have a square cross section, or may employ hexagonal fuel rod packing and have a hexagonal cross section, or so forth). The reactor core **10** comprising fuel assemblies **14** is disposed in a core basket **16** that is mounted inside the pressure vessel **12.** The lower end fitting of each fuel assembly **14** includes features **18** that engage with a core plate. (The core plate, basket mounting, and other details are not shown in diagrammatic FIGURE 1).

The reactor control system typically includes a control rod assembly (CRA) operated by a control rod drive mechanism (CRDM) (not shown in FIGURES 1 and 2). The CRA includes vertically oriented control rods **20** containing neutron poison. A given control rod is controllably inserted into one fuel assembly **14** through a designated vertical guide tube of the fuel assembly **14.** Typically, all the control rods for a given fuel assembly **14** are connected at their top ends to a common termination structure **22,** sometimes called a spider, and a connecting rod **24** connects at its lower end with the spider **22** and at its upper portion with the CRDM (upper end not shown). The CRA for a single fuel assembly **14** thus comprises the control rods **20,** the spider **22,** and the connecting rod **24,** and this CRA moves as a single translating unit. In the PWR design, the CRA is located above the reactor core **10** and moves upward in order to withdraw the control rods **20** from the fuel assembly **14** (and thereby increase reactivity) or downward in order to insert the control rods **20** into the fuel assembly **14** (and thereby decrease reactivity). The CRDM is typically designed to release the control rods so as to fall into the reactor core **10** and quickly quench the chain reaction in the event of a power failure or other abnormal event.

Because the reactor control system is a safety-related feature, applicable nuclear safety regulations (for example, promulgated by the Nuclear Regulatory Commission, NRC, in the United States) pertain to its reliability, and typically dictate that the translation of the CRA be reliable and not prone to jamming. The translation of the CRA should be guided to ensure the control rods move vertically without undue bowing or lateral motion. Toward this end, each CRA is supported by a control rod guide structure **30** which comprises horizontal guide plates **32** mounted in a spaced-apart fashion on vertical frame elements **34.** Each guide plate **32** includes openings or passages or other camming surfaces (not visible in the side view of diagrammatic FIGURES 1 and 2) that constrain the CRA so that the rods **20, 24** are limited to vertical movement without bowing or lateral movement.

With continuing reference to FIGURES 1 and 2, the CRA guide assemblies **30** have substantial weight indicated by downward arrow F_{G,weight} in FIGURE 2, and are supported by a weight-bearing upper core plate **40.** The fuel assemblies **14** are also relatively heavy. However, in a conventional PWR the primary coolant circulation rises through the fuel assemblies **14,** producing a net lifting force on the fuel assemblies **14** indicated by upward arrow F_{FA,lift}. Accordingly, the fuel assemblies **14** while typically resting on the bottom of the core basket **16,** are susceptible to being lifted upward by the lift force F_{FA,lift} and press against the upper core plate **40.** The lift force F_{FA,lift} is thus also borne by the upper core plate **40.** The upper core plate **40** thus is a spacer element disposed between and spacing apart the lower end of the CRA guide assembly **30** and the upper end of the corresponding fuel assembly **14.** To avoid damaging the fuel rods, each fuel assembly **14** typically includes a hold-down spring sub-assembly **42** that preloads the fuel assembly **14** against the upper core plate **40** and prevents lift-off of the fuel assembly **14** during normal operation. The hold-down spring **42** is thus also disposed between the lower end of the CRA guide assembly **30** and the upper end of the corresponding fuel assembly **14..** Additionally, alignment features **44, 46** are provided on the upper end of the fuel assembly **14** and the lower end of the CRA guide structure **30,** respectively, to assist alignment.

A PWR such as that of FIGURES 1 and 2 is typically designed to provide electrical power of around 500-1600 megawatts. The fuel assemblies **14** for these reactors are typically between 12 and 14 feet (3,7 - 4,3 m) long (i.e., vertical height) and vary in array size from 14×14 fuel rods per fuel assembly to 18×18 fuel rods per fuel assembly. The fuel assemblies for such PWR systems are typically designed to operate between 12- and 24-month cycles before being shuffled in the reactor core. The fuel assemblies are typically operated for three cycles before being moved to a spent fuel pool. The fuel rods typically comprise uranium dioxide (UO₂) pellets or mixed UO₂/gadolinium oxide (UO₂-Gd₂O₃) pellets, of enrichment chosen based on the desired core power.

US 3 940 311 A discloses a system provided for determining during operation of a nuclear reactor having fluid pressure operated control rod mechanisms the exact location of a fuel assembly with a defective fuel rod.

US 4 078 966 A discloses the pressure vessel of a reactor such as a PWR provided with nozzles for the emergency injection of coolant into at least one water-box placed above the reactor core and rigidly fixed to the pressure vessel.

US 3 940 311 A and US 4 078 966 A do not disclose a support element disposed above control rod assembly guide assemblies wherein the support element suspends the control rod assembly guide assemblies from above wherein the lower end of each control rod assembly guide structure includes mating structures that mate with an upper end of the corresponding fuel assembly.

### BRIEF SUMMARY

An apparatus comprising a pressurized water reactor (PWR) according to the invention is defined in claim 1. Preferred embodiments are defined in the dependent claims.

A method for operating a pressurized water reactor (PWR) according to the invention is defined in claim 8.

### BRIEF DESCRIPTION OF THE DRAWINGS

The invention may take form in various components and arrangements of components, and in various process operations and arrangements of process operations within the scope of the invention, which is defined in the appended claims. The drawings are only for purposes of illustrating preferred embodiments and are not to be construed as limiting the invention.
FIGURE 1 diagrammatically shows a side sectional view of the lower portion of a pressurized water reactor (PWR) according the the prior art.
FIGURE 2 diagrammatically shows an exploded view of a single fuel assembly and the corresponding control rod assembly (CRA) guide structure of the prior art PWR of FIGURE 1.
FIGURE 3 diagrammatically shows a side sectional view of the lower portion of a low flow rate PWR as disclosed herein.
FIGURE 4 diagrammatically shows an exploded view of a single fuel assembly and the corresponding CRA guide structure of the disclosed PWR of FIGURE 3.
FIGURE 5 diagrammatically shows an enlarged view of the lower end of the CRA guide structure and upper end of the fuel assembly of the embodiment of FIGURES 3 and 4 showing the mating features and the gap.
FIGURE 6 diagrammatically shows a single fuel assembly and the corresponding CRA guide structure of another disclosed PWR embodiment.
FIGURE 7 diagrammatically shows a suitable shipping configuration for shipping the fuel assembly and continuous CRA guide structure via rail or another suitable carrier to a PWR site for installation during a fueling or refueling operation.

### DETAILED DESCRIPTION OF THE PREFERRED EMBODIMENTS

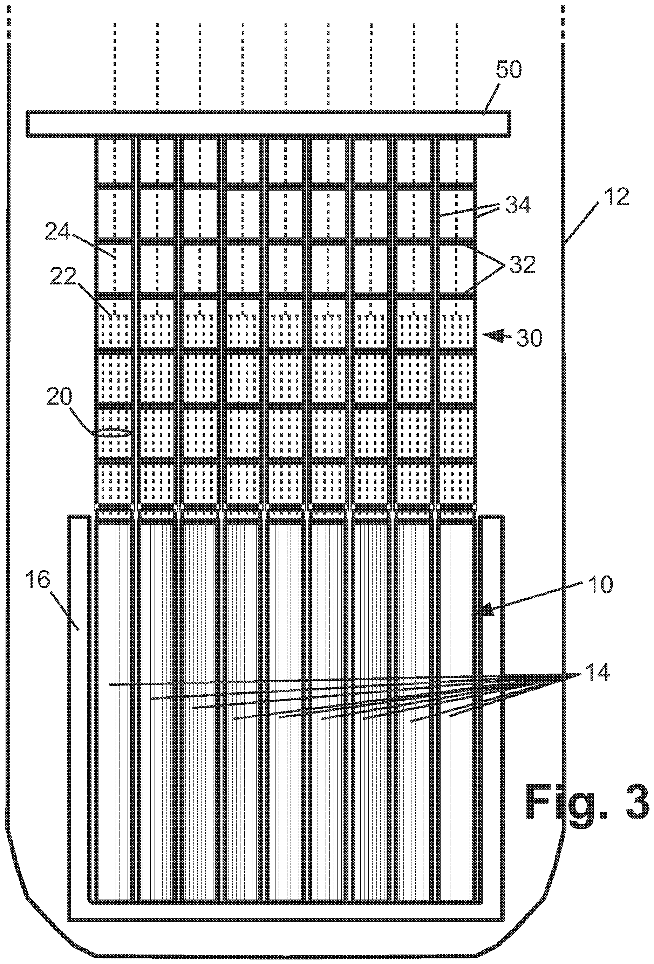

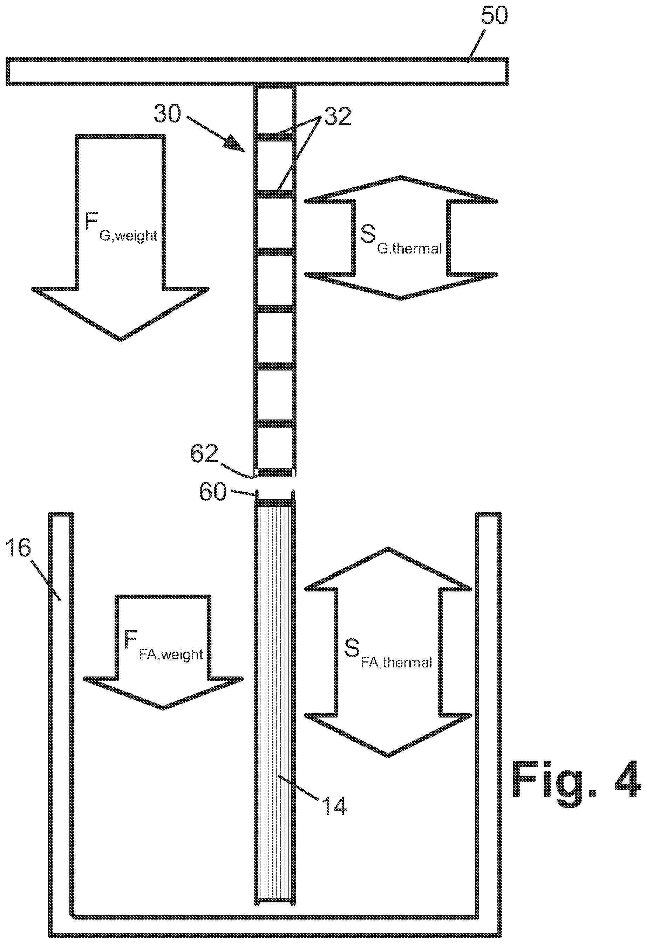

With reference to FIGURES 3 and 4, a pressurized water reactor (PWR) is shown which is designed to operate as a small modular reactor (SMR). The SMR preferably outputs 300 megawatts (electrical) or less, although it is contemplated for the SMR to output at higher power. The PWR of FIGURES 3 and 4 is designed to operate at a relatively low primary coolant flow rate, which is feasible because of the relatively low SMR output power. The PWR of FIGURES 3 and 4 includes a number of components that have counterparts in the PWR of FIGURES 1 and 2, including: a reactor pressure vessel **12;** a reactor core **10** comprising fuel assemblies **14** in a core basket **16;** a control rod assembly (CRA) for each fuel assembly that includes control rods **20** mounted on a spider **22** connected to the lower end of a connecting rod **24;** and a CRA guide structure **30** for each CRA comprising horizontal guide plates **32** mounted in a spaced-apart fashion on vertical frame elements **34.** Although these components have counterparts in the conventional PWR of FIGURES 1 and 2, it is to be understood that the sizing or other aspects of the components in the PWR of FIGURES 3 and 4 may be optimized for the SMR operational regime. For example, a PWR designed to operate at 150 megawatts electrical may have fuel assemblies **14** that are 8 feet (2,4 m) long and use a 17×17 bundle of fuel rods per fuel assembly **14** with 24 guide tubes spaced on a 0.496-inch (1,260 cm) pitch.

The PWR of FIGURES 3 and 4 omits the upper core plate **40** of the embodiment of FIGURES 1 and 2. Omitting this weight-bearing plate **40** has substantial advantages. It reduces the total amount of material thus lowering manufacturing cost. Additionally, the upper core plate **40** presents substantial frontal area generating flow resistance. Although this can be mitigated to some extent by including flow passages in the plate **40,** the frontal area occupied by the control rods **20,** the lower end plates of the CRA guide assemblies **30,** and the upper end fittings of the fuel assemblies **14,** limits the amount of remaining frontal area that can be removed. The load-bearing nature of the upper core plate **40** also limits the amount of material that can be safely removed to introduce flow passages through the plate **40,** since removing material to provide flow passages reduces the load-bearing capacity of the plate **40.**

However, omitting the load-bearing upper core plate **40** introduces substantial new issues. In the embodiment of FIGURES 1 and 2, the plate **40** performs the functions of supporting the weight of the CRA guide assemblies **30** and providing the upper stop against which the lift force F_{FA,lift} on the fuel assemblies **14** operates to stabilize the positions of the fuel assemblies **14.** Moreover, the upper core plate **40** provides a common anchor point for aligning the fuel assemblies **14** with their respective CRA guide assemblies **30.** These issues are addressed in the embodiment of FIGURES 3 and 4 as follows.

In the embodiment of FIGURES 3 and 4, the CRA guide assemblies **30** are suspended from above by a support element **50** disposed above the CRA guide assemblies **30.** In embodiments in which the pressure vessel **12** is a cylindrical pressure vessel (where it is to be understood that "cylindrical" in this context allows for some deviation from a mathematically perfect cylinder, for example to allow for tapering of the upper end of the pressure vessel **12,** adding various vessel penetrations or recesses, or so forth), the support element **50** is suitably a support plate **50** having a circular periphery supported by the cylindrical pressure vessel (for example supported by an annular ledge, or by welding the periphery of the plate **50** to an inner cylindrical wall of the cylindrical pressure vessel, or so forth). According to the invention, the CRA guide assemblies **30** are not supported from below. This arrangement is feasible because in the SMR design the reduced height of the fuel assemblies **14** reduces the requisite travel for the CRA and hence reduces the requisite height for the CRA guide assemblies **30** in the SMR of FIGURES 3 and 4 as compared with the higher power PWR of FIGURES 1 and 2.

The support element **50** is located in a less congested area of the pressure vessel **12** as compared with the upper core plate **40** of the PWR of FIGURES 1 and 2. The area above the CRA support structures **30** includes the upper ends of the CRA assemblies **30** and the connecting rods **24,** but not the fuel assemblies. Accordingly, there is more "unused" frontal area of the support plate **50,** which allows for forming relatively more and/or larger flow passages into the support element **50.** The support element **50** is also further away from the reactor core **10** than the upper core plate **40** of the PWR of FIGURES 1 and 2, which makes any spatial variation in the flow resistance that may be introduced by the frontage of the support element **50** less problematic as compared with the upper core plate **40.**

The load-bearing provided by the upper core plate **40** respective to the upward lift force F_{FA,lift} is not needed in the SMR of FIGURES 3 and 4, because the flow rate sufficient to provide SMR output of 300 megawatts (electrical) is generally not sufficient to generate a lift force capable of overcoming the weight of the fuel assemblies **14.** Thus, in the SMR embodiment of FIGURES 3 and 4 the fuel assemblies **14** have a net force F_{FA,weight} which is the weight of the fuel assembly **14** minus the lifting force generated by the relatively low primary coolant flow rate. As a consequence, the fuel assemblies **14** remain supported from below by the core basket **16** (or by a core plate component inside of or forming the bottom of the core basket **16**). Thus, in the embodiment of FIGURES 3 and 4 the upper end of the fuel assembly **14** is not configured as a load-bearing structure, and both the upper core plate **40** and the hold-down springs **42** are omitted in the SMR embodiment of FIGURES 3 and 4.

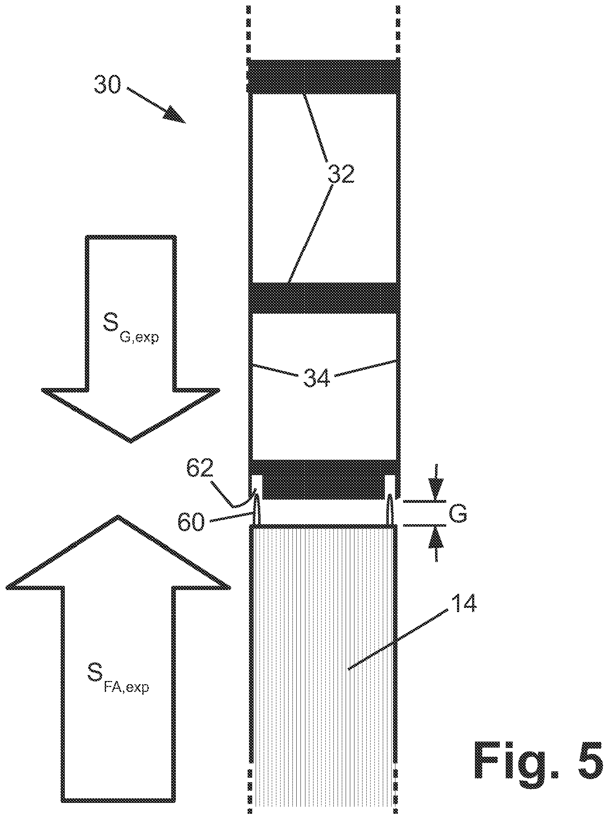

With continuing reference to FIGURES 3 and 4 and with further reference to FIGURE 5, relative alignment between corresponding CRA guide structure **30** and fuel assembly **14** is achieved by engagement of mating features **60** on the top end of the fuel assembly **14** and corresponding mating features **62** on the bottom end of the CRA guide structure **30.** The features **60, 62** ensure lateral alignment. In the illustrative embodiment the mating features **60** on the top of the fuel assembly **14** are protrusions, e.g. pins, and the mating features **62** on the bottom of the CRA guide structure **30** are mating recesses; however, other mating feature configurations are contemplated. In some embodiments the mating pins **60** on the top of the fuel assembly **14** also serve as anchor points for lifting the fuel assembly **14** out of the PWR during refueling or other maintenance operations, as described in Walton et al., "Nuclear Reactor Refueling Methods and Apparatuses", U.S. Serial No. 13/213,389 filed August 19, 2011.

With particular reference to FIGURES 4 and 5, vertical alignment is an additional issue. The fuel assembly **14** and the CRA guide structure **30** are subject to respective strains S_{G,thermal} and S_{FA,thermal} as the components **14, 30** increase from ambient temperature to operational temperature. In the embodiment of FIGURES 3-5, the upper end of the CRA guide structure **30** and the lower end of the fuel assembly **14** are both anchored. Thus, the thermal expansion causes the upper end of the fuel assembly **14** and the lower end of the CRA guide structure **30** to come closer together. This is accommodated by a gap **G** between the lower end of the CRA guide structure **30** and the upper end of the corresponding fuel assembly **14.** The gap **G** is chosen to accommodate thermal expansion at least up to temperatures credibly expected to be attained during operation or credible malfunction scenarios. The mating features **60, 62** are designed to span the gap **G** in order to provide the lateral alignment between the CRA guide structure **30** and corresponding fuel assembly **14.** It will be noted that there is no spacer element or spring in the gap **G.** (The control rods **20** do pass through the gap **G** when inserted into the fuel assembly **14;** however, the control rods **20** are not spacer elements that space apart the CRA guide structure **30** and fuel assembly **14,** and are also not springs. Similarly, primary coolant water fills the gap **G** but is also neither a spacer element nor a spring).

The embodiment of FIGURES 3-5 employs the CRA guide structure **30** which comprises the spaced apart horizontal guide plates **32** mounted on the vertical frame elements **34.** This is a conventional CRA guide structure design, and is commonly used in conjunction with external control rod drive mechanism (CRDM) units (not shown in FIGURES 3-5) disposed outside of and above the pressure vessel **12** of the PWR. In some embodiments, it is contemplated to employ internal CRDM disposed inside the pressure vessel **12.**

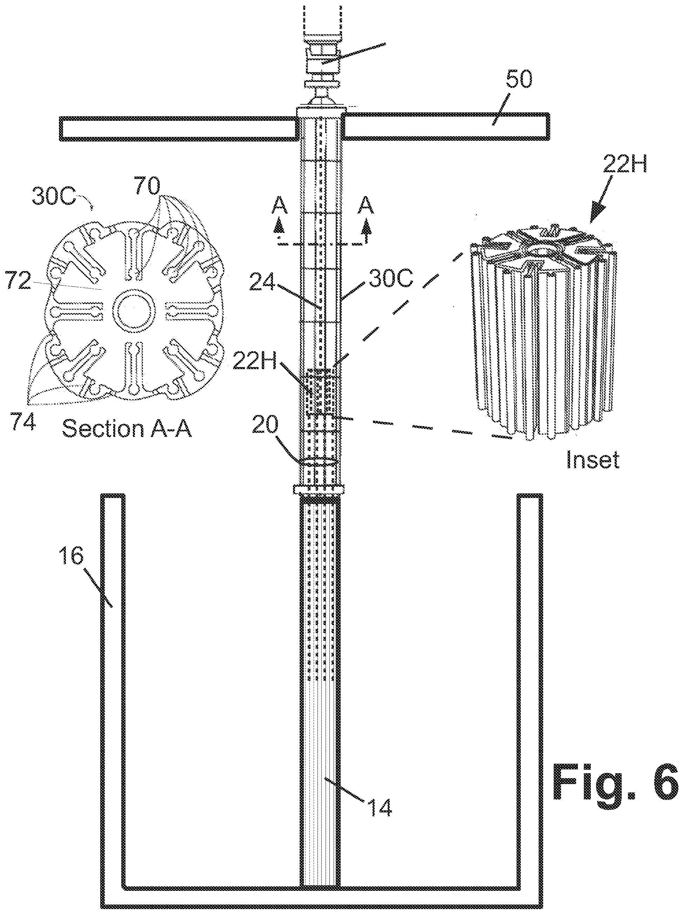

With reference to FIGURE 6, it is also contemplated to employ a continuous CRA guide structure **30C** which provides continuous support/guidance of the CRA over the entire length of the continuous CRA guide structure **30C.** The embodiment of FIGURE 6 also employs a heavy terminating element **22H** in place of the conventional spider to provide the common termination structure at which the top ends of the control rods **20** are connected. The heavy terminating element **22H** advantageously adds substantial weight to the translating CRA **20, 22H, 24** as compared with the conventional CRA **20, 22, 24** of the PWR of FIGURES 3-5. This additional weight reduces SCRAM time and effectively compensates for the otherwise reduced weight of the SMR CRA which is shortened as compared with the CRA of a higher-power PWR. The "Inset" of FIGURE 6 shows a perspective view of the heavy terminal element **22H,** while "Section A-A" of FIGURE 6 shows a cross-section of the continuous CRA guide structure **30C.** As seen in Section A-A, the CRA guide structure **30C** includes camming surfaces **70** that guide the control rods **20,** and a larger contoured central opening **72** that guides the heavy terminal element **22H.** Additionally, the CRA guide structure **30C** includes flow passages **74** to allow primary coolant water to egress from the internal volume **70, 72** quickly as the CRA falls during a SCRAM. Additional aspects of the continuous CRA guide structure **30C** and the heavy terminal element **22H** are set forth in Shargots et al., "Support Structure For A Control Rod Assembly Of A Nuclear Reactor", U.S. Serial No. 12/909,252 filed October 21, 2010.

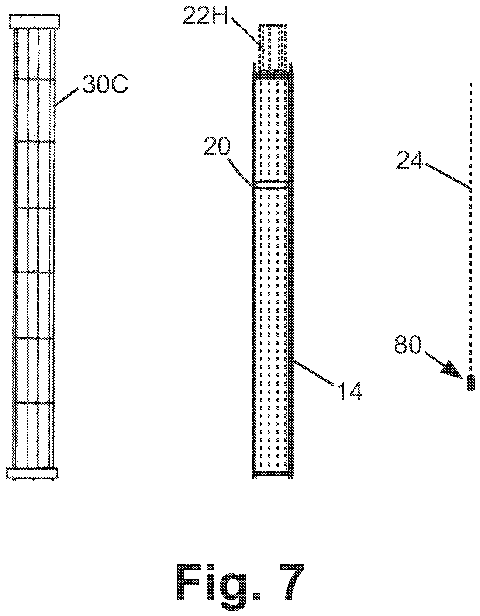

With reference to FIGURE 7, the fuel assembly **14,** CRA guide structure **30C,** and connecting rod **24** are suitably shipped as components. Because the upper end of the nuclear reactor fuel assembly is not configured as a load-bearing structure and does not include the hold-down spring sub-assembly **42** (*cf*. FIGURE 2), shipping weight is reduced, and the possibility of collision or entanglement of the hold-down springs with surrounding objects during shipping is eliminated. As seen in FIGURE 7, the shipping configuration for the fuel assembly **14** includes the control rods **20** fully inserted into the fuel assembly **14..** Optionally, the heavy terminal element **22H** (or, alternatively, the spider **22** in embodiments employing it) is connected to the top ends of the control rods **20** that are inserted into the fuel assembly **14** during shipping. The continuous CRA guide structure **30C** can be shipped as a single pre-assembled unit, as shown in FIGURE 7, or alternatively may be constructed as stacked segments that are shipped in pieces and welded together at the PWR site. The connecting rod **24** is suitably shipped as a separate element that is detached from the spider or heavy terminal element **22, 22H.** The lower end of the connecting rod **24** optionally includes a J-lock fitting or other coupling **80** via which the lower end may be connected to the spider or heavy terminal element **22, 22H** during installation into the PWR. Alternatively, the lower end may be directly welded to the spider or heavy terminal element **22, 22H.**

The preferred embodiments have been illustrated and described. Obviously, modifications and alterations will occur to others upon reading and understanding the preceding detailed description. It is intended that the invention be construed as including all such modifications and alterations insofar as they come within the scope of the appended claims.

## Claims

1. An apparatus comprising:
a pressurized water reactor (PWR) including:
a pressure vessel (12) containing primary coolant water,
a nuclear reactor core (10) disposed in the pressure vessel and including a plurality of fuel assemblies (14) wherein each fuel assembly includes a plurality of fuel rods containing a fissile material,
a control system including a plurality of control rod assemblies
wherein each control rod assembly is guided by a corresponding control rod assembly guide assembly (30), and
a support element (50) disposed above the control rod assembly guide assemblies wherein the support element suspends the control rod assembly guide assemblies from above, **characterized in that** the lower end of each control rod assembly guide assembly (30) includes mating structures (60) that engage with corresponding mating structures (62) of the upper end of the corresponding fuel assembly.

2. The apparatus of claim 1, wherein the pressure vessel is a cylindrical pressure vessel and the support element comprises a support plate having a circular periphery supported by the cylindrical pressure vessel.

3. The apparatus of claim 2, wherein the control rod assembly guide structures hang downward from the support plate.

4. The apparatus of claim 1, wherein there is a gap (G) between the lower end of each control rod assembly guide structure and the upper end of the corresponding fuel assembly.

5. The apparatus of claim 4, wherein the fuel assemblies are supported from below.

6. The apparatus of claim 1 or 2, wherein flow of primary coolant water in the pressure vessel in the operational state of the PWR is not sufficient to lift the fuel assemblies upward.

7. The apparatus of claim 1, wherein the control rod assembly guide structures hang downward from the support element.

8. A method comprising:
operating a pressurized water reactor (PWR) wherein the operating includes circulating primary coolant in a pressure vessel (12) upward through a nuclear reactor core (10) that includes a plurality of fuel assemblies (14) wherein each fuel assembly includes a plurality of fuel rods containing a fissile material; and
during the operating, suspending control rod assembly guide assemblies (30), one to support each of a plurality of control rod assemblies, disposed in the pressure vessel from suspension anchors disposed above the control rod assembly guide assemblies and aligning each control rod assembly guide assembly with a corresponding fuel assembly by engaging mating features disposed on the bottom ends of each control rod assembly guide assembly and the top ends of the fuel assemblies.

## Patentansprüche

1. Vorrichtung, die Folgendes umfasst:
einen Druckwasserreaktor (DWR), der Folgendes aufweist:
einen Druckbehälter (12), der Primärkühlmittelwasser enthält,
einen im Druckbehälter liegenden Reaktorkern (10), der mehrere Brennelemente (14) aufweist, wobei jedes Brennelement mehrere Spaltmaterial enthaltende Brennstäbe aufweist,
ein Steuersystem, das mehrere Steuerstabbaugruppen aufweist, wobei jede Steuerstabbaugruppe von einer entsprechenden Steuerstabbaugruppenführungsbaugruppe (30) geführt wird, und
ein Trägerelement (50), das über den Steuerstabbaugruppenführungsbaugruppen liegt, wobei das Trägerelement die Steuerstabbaugruppenführungsbaugruppen von oben aufhängt,
**dadurch gekennzeichnet, dass**
das untere Ende jeder Steuerstabbaugruppenführungsbaugruppe (30) Anschlussstrukturen (60) aufweist, die mit entsprechenden Anschlussstrukturen (62) des oberen Endes des entsprechenden Brennelements in Eingriff stehen.

2. Vorrichtung nach Anspruch 1, wobei der Druckbehälter ein zylindrischer Druckbehälter ist und das Trägerelement eine Trägerplatte mit einer kreisförmigen Peripherie, getragen von dem zylindrischen Druckbehälter, umfasst.

3. Vorrichtung nach Anspruch 2, wobei die Steuerstabbaugruppenführungsstrukturen von der Trägerplatte nach unten hängen.

4. Vorrichtung nach Anspruch 1, wobei zwischen dem unteren Ende jeder Steuerstabbaugruppenführungsstruktur und dem oberen Ende des entsprechenden Brennelements ein Spalt (G) liegt.

5. Vorrichtung nach Anspruch 4, wobei die Brennelemente von unten getragen werden.

6. Vorrichtung nach Anspruch 1 oder 2, wobei das Strömen von Primärkühlmittelwasser in dem Druckbehälter im Betriebszustand des DWR nicht dazu ausreicht, die Brennelemente anzuheben.

7. Vorrichtung nach Anspruch 1, wobei die Steuerstabbaugruppenführungsstrukturen von dem Trägerelement nach unten hängen.

8. Verfahren, das Folgendes umfasst:
Betreiben eines Druckwasserreaktors (DWR), wobei das Betreiben ein Zirkulierenlassen von Primärkühlmittel in einem Druckbehälter (12) nach oben durch einen Reaktorkern (10), der mehrere Brennelemente (14) aufweist, wobei jedes Brennelement mehrere Spaltmaterial enthaltende Brennstäbe aufweist, beinhaltet, und
während des Betreibens Aufhängen von im Druckbehälter angeordneten Steuerstabbaugruppenführungsbaugruppen (30), jeweils eine zum Tragen jeder von mehreren Steuerstabbaugruppen, an Aufhängungsankern, die sich über den Steuerstabbaugruppenführungsbaugruppen befinden, und Ausrichten jeder Steuerstabbaugruppenführungsbaugruppe bezüglich eines entsprechenden Brennelements durch Ineingriffbringen von Anschlusselementen, die sich an den unteren Enden jeder Steuerstabbaugruppenführungsbaugruppe und den oberen Enden der Brennelemente befinden.

## Revendications

1. Appareil comprenant :
un réacteur à eau sous pression (REP) comportant :
une cuve sous pression (12) contenant de l'eau de refroidissement primaire ;
un coeur de réacteur nucléaire (10) disposé dans la cuve sous pression et comportant une pluralité d'assemblages combustibles (14), chaque assemblage combustible comportant une pluralité de crayons combustibles contenant un matériau fissile,
un système de commande comportant une pluralité de grappes de commande, chaque grappe de commande étant guidée par un guide de grappe correspondant (30), et
un élément de support (50) disposé au-dessus des guides de grappes, l'élément de support suspendant les guides de grappes depuis le dessus,
**caractérisé en ce que**
l'extrémité inférieure de chaque guide de grappe (30) comporte des structures d'accouplement (60) qui s'engagent avec des structures d'accouplement correspondantes (62) de l'extrémité supérieure de l'assemblage combustible correspondant.

2. Appareil de la revendication 1, dans lequel la cuve sous pression est une cuve sous pression cylindrique et l'élément de support comprend une plaque de support ayant une périphérie circulaire supportée par la cuve sous pression cylindrique.

3. Appareil de la revendication 2, dans lequel les structures guides de grappes pendent vers le bas depuis la plaque de support.

4. Appareil de la revendication 1, dans lequel il existe un espace (G) entre l'extrémité inférieure de chaque structure guide de grappe et l'extrémité supérieure de l'assemblage combustible correspondant.

5. Appareil de la revendication 4, dans lequel les assemblages combustibles sont supportés depuis le dessous.

6. Appareil de la revendication 1 ou 2, dans lequel une circulation d'eau de refroidissement primaire dans la cuve sous pression à l'état opérationnel du REP n'est pas suffisante pour soulever les assemblages combustibles vers le haut.

7. Appareil de la revendication 1, dans lequel les structures guides de grappes pendent vers le bas depuis l'élément de support.

8. Procédé comprenant :
le fonctionnement d'un réacteur à eau sous pression (REP), le fonctionnement comportant la circulation d'un réfrigérant primaire dans une cuve sous pression (12) vers le haut à travers un coeur de réacteur nucléaire (10) qui comporte une pluralité d'assemblages combustibles (14), chaque assemblage combustible comportant une pluralité de crayons combustibles contenant un matériau fissile ; et
pendant le fonctionnement, la suspension de guides de grappes (30), un pour supporter chacune d'une pluralité de grappes de commande, disposés dans la cuve sous pression depuis des ancres de suspension disposées au-dessus des guides de grappes, et l'alignement de chaque guide de grappe avec un assemblage combustible correspondant par engagement de pièces d'accouplement disposées sur les extrémités inférieures de chaque guide de grappe et les extrémités supérieures des assemblages combustibles.
